# EUROPEAN PATENT SPECIFICATION

(11) **EP 3 478 485 B1**
(45) Date of publication and mention of the grant of the patent: **02.09.2020**
(21) Application number: 16733093.5
(22) Date of filing: 30.06.2016
(51) Int. Cl.: B29D 30/02, B60C 19/08, B29D 30/68, B29D 30/72

(54) **METHOD FOR MAKING A TIRE**
VERFAHREN ZUR HERSTELLUNG EINES REIFENS
PROCÉDÉ DE FABRICATION D'UN PNEU

(43) Date of publication of application: 08.05.2019
(60) Divisional application: 20180462.2
(73) Proprietor: ARTIC INVESTMENTS S.A., 1611 Luxembourg (LU)
(72) Inventor: DE WITTE, Tim, 1611 Luxembourg (LU); D.A. GUNASEKARA, Hapunthanthrige, 1611 Luxembourg (LU); PRADEEPA, Sumudu, 1611 Luxembourg (LU); DESILVA, Saseendra, 1611 Luxembourg (LU); ANDERSON, David, 1611 Luxembourg (LU); MICHE, Thierry, 1611 Luxembourg (LU); REICH, Ales, 1611 Luxembourg (LU); ALBOTA, Adrian, 1611 Luxembourg (LU); VAN DE WIELE, Hugo, 1611 Luxembourg (LU)
(74) Representative: Gevers Patents
(86) International application number: PCT/EP2016/065414
(87) International publication number: WO 2018/001498

(56) References cited:
- EP-A1- 0 895 877
- EP-A1- 1 574 361
- EP-A1- 1 738 893
- EP-A1- 2 036 704
- EP-A2- 0 787 604
- EP-A2- 1 175 992
- EP-A2- 2 522 496
- WO-A1-00/30875
- WO-A1-2011/115564
- DE-A1-102013 107 385
- DE-A1-102014 102 133
- DE-C1- 10 154 454
- DE-U- 1 993 828
- US-A- 1 797 545
- US-A- 2 339 546
- US-A- 2 896 059
- US-A1- 2003 178 125
- US-A1- 2009 126 844
- US-A1- 2012 205 021

## Description

The present invention relates to a method for producing a non-marking anti-static solid tire according to the preamble of the first claim.

It is known from the state of the art to produce a tread surface of a solid tire which contacts the floor over which the tire is moving, comprising curable or cured non-marking material to avoid the presence of unwanted tire marks on the floor surface. Tires made of rubber containing carbon black, usually leave black markings when moving over the floor. Such markings are especially undesired in situations where for example high demands on hygiene are imposed, for example areas where food is being processed. It is also known from the state of the art that the marking of the floor can be avoided by replacing part of the traditional mixtures for the tread surface which contain carbon black with, for example, silica based mixtures to obtain a more non-marking material.

A tire having a tread surface made of such a non-marking mixture however presents the disadvantage that the electrical conductivity of the non-marking tread surface is low. Whereas with a tire having a tread surface comprising a carbon black mixture, electrical charges built up to the vehicle could be sufficiently conducted towards the ground, tires of which the tread surface is made of a non-marking mixture can only conduct the electrical charge towards the ground at a higher potential difference between the ground and the vehicle. As a consequence, tires having a tread surface made of a non-marking mixture often show spark discharges, which can be dangerous and are often unwanted, especially in environments containing explosive or inflammable materials.

More in particular EP2036704 discloses an attempt to solve this problem and discloses a method for making a tire for a vehicle wheel comprising electrically conducting means, the tire comprising a tread surface delimited by two opposing tire sidewalls. A first step of the method consists of making a preliminary tire, the uncured tire, comprising a first layer comprising an outer circumferential surface and an inner circumferential surface interconnected by opposing first layer sidewalls. These first layer sidewalls delimit together the first layer which extends in circumferential direction of the tire. The first layer is made of a first material containing a reinforcing filling material. This first material comprises less than 2 pphr (parts per hundred) carbon black, at least 30 pphr of reinforcing filling material and has an electrical resistance above 10¹⁰ Ωcm (Ohm centimetre), due to which it is called a non-conducting material of a non-conducting part of the tire. A second step consists of removing a part of the first layer, using for example a drilling or cutting tool, to create a path which extends at least from an inner circumferential surface of the first layer through the first layer towards an outer circumferential surface of the first layer. The path is subsequently filled under atmospheric pressure with a conducting material, the path-filling material, having an electrical resistance which is smaller than 10¹⁰ Ωcm. Finally, the preliminary tire added with the conducting material becomes a final tire so that the respective first layer sidewalls become part of the respective tire sidewalls and so that a total ground contacting surface of at least 150 mm² (squared millimetre) is created.

The prior art provides a way of creating a conducting path of conducting material through the non-conducting part of the tire, being for example the first layer. EP2036704 provides a method that comprises the making of a path through for example the first layer, up to the inner circumferential surface of the first layer that is in contact with the rim of the wheel. The path is created by removing a part of the non-conducting material for example of the first layer, using a tool such as a knife or drilling tool. However, there is no way of telling with certitude whether the path has entered the conducting part of the tire, without having to take away an excessive amount of material which causes for example material waste and degenerative mechanical properties. Making the conducting path too short to reach the inner circumferential surface of the first layer is detrimental to the functioning of the tire as an anti-static tire because no charge would be able to flow easily through the path. A further concern with the existing methods lies in the fact that there is no disclosed way to ascertain that the path after curing is for example defect free such as for example filled entirely with conducting material, without for example interruption of the pathway by for example non-conducting material or air bubbles hindering the flow of charge through the path.

There is thus need for a method for producing tires with a non-marking thread surface which are more easily provided with conducting material.

It is furthermore known from WO2011/115564 to provide a method of producing an anti-static tire that can be regarded as a non-marking tire. This document teaches the coating of the sidewall of a tire with an electrically conductive coating. It is furthermore known from DE1993828 to provide a spraying process of an electrically conductive coating onto the surface of a tire that does not have a non-marking property. However, these documents are silent about the non-marking reinforcing material in the first layer and about the curing process of the first layer together with the coating.

Accordingly, it is an object of the present invention to provide such a method. This is achieved by the features of the independent claim 1 of the present application.

Thereto, the method of claim 1 of the present invention comprises that the conducting material is added along at least one of the opposing tire sidewalls of the preliminary tire.

The inventor has found that by adding the conducting material along the tire sidewalls of the preliminary tire, according to any preferred direction such as in the radial or the axial directions, the operator can now more easily control, for example visually, the integrity of the added conducting material, with respect to for example the presence of air bubbles, before and after curing of the tire.

An added advantage of the invention is that by adding the conducting material along the tire sidewalls of the preliminary tire, the operator is able to, for example visually, certify that the conducting material has been positioned up to an adequate level, for example up to the inner circumferential surface of the first layer. This allows the operator to make sure the conducting material crosses entirely the material of the first layer, for example the non-conducting material, so that the conducting material can provide a flow of charge without interruption by non-conducting material, for example the first layer. This feature also allows the operator to limit the depth of the conducting material accordingly to its required depth without going to deep so that for example no superfluous amount of material must be removed and so that the degeneration of mechanical properties can be limited.

According to embodiments of the present invention, the conducting material is added along at least one of the opposing first layer sidewalls of the preliminary tire.

According to embodiments of the present invention, the conducting material is added along the outer surface of at least one of the opposing tire sidewalls.

In the present invention, the preliminary tire is an uncured curable tire, such as for example a rubber tire.

According to embodiments of the present invention, the first layer material is an uncured curable material, such as for example rubber.

According to embodiments of the present invention, the added conducting material is an uncured curable conducting material, such as for example conducting rubber.

In the present invention, the uncured curable material is being cured in order to create the final tire. During curing the non-conducting material for example of the first layer, and the conducting material will bind together to form one structural entity.

According to embodiments of the present invention, the tread pattern is created in the outer surface of the first layer during curing. The tread pattern influences the behaviour of the tire, for example with respect to water evacuation or noise production.

According to embodiments of the present invention, at least one path has been created which extends at least from the inner circumferential surface of the first layer through the first layer towards the outer circumferential surface of the first layer and wherein the conducting material is added to the path. These conducting paths provide a way for the charge to flow through the non-conducting part of the tire, for example the first layer of the tire.

According to embodiments of the present invention, the path is created by removing at least part of the first layer from the outer circumferential surface of the first layer through the first layer towards the inner circumferential surface of the first layer. After creating the path, the conducting material is added to the path. The inventor has found that by adding the conducting material as described above, in any direction for example radial or axial along any of the tire sidewalls of the tire, it becomes more easy for the tire manufacturer to insert the conducting material into the path due to the more free accessibility of the operator to these sidewalls. Thanks to this more free accessibility of the operator to the sidewall, it has been found that the non-conducting material of for example the first layer can easily be cut out even at the bottom side of the path. Another advantage of the more easy removal of material is that there is less risk of having non-conducting material, for example of the first layer, remaining in the pathway and form a barrier to charge flow through the path.

According to embodiments of the present invention, the path has been created before curing. In the embodiments where the uncured material has to be cured in order to obtain the tire, the first layer material, for example non-conducting material, is removed before curing.

According to embodiments of the present invention, the path is created with a first material removal tool.

According to embodiments of the present invention, the rubber removal tool is a cutting tool.

According to embodiments of the present invention, the cutting tool is a knife.

According to embodiments of the present invention, the path is created with a heated first material removal tool. In the embodiments where the preliminary tire is an uncured curable preliminary tire, the inventor has found that the heated first material removal tool is preferably heated beneath the vulcanisation temperature of the first layer material, if applicable, for example between 70°C (degrees Celsius) and 100°C.

According to alternative embodiments of the invention, the path is created during curing. In this embodiment the conducting material is for example added along any of the uncut preliminary tire sidewalls before curing. After curing, the conducting material will have formed a path in the first material, for example the first layer. An advantage of this approach is that no material has to be cut away from the first material, rationing material and labour costs.

According to embodiments of the present invention, the conducting material is at least partly enveloped by the first material. Depending on the preferred embodiments of the method, the conducting material will be partly or entirely enveloped by the first material. The material of the first layer, and the conducting material will bind together more to form one structural entity.

According to embodiments of the present invention, the addition of the conducting material takes place under atmospheric pressure. It has been shown that by adding the conducting material under atmospheric pressure, a tire may be provided with conducting material having a larger cross-sectional area.

According to embodiments of the invention, the conducting material extends linearly from the inner circumferential surface towards the outer circumferential surface. This embodiment allows the operator to easily insert the conducting material into material of the first layer, for example non-conducting material, for example into the first layer.

According to embodiments of the present invention, the conducting material extends radially from the inner circumferential surface towards the outer circumferential surface. In this embodiment the length of the conducting material through the material of the first layer, for example non-conducting material,, for example through the first layer from the inner circumferential surface towards the outer circumferential surface, is minimised, thus requiring the least amount of conducting material and minimising the resistance against the flow of charge.

According to embodiments of the present invention, the conducting material is cylindrical, having different possible cross-sectional shapes such as at least semi-circular, triangular, at least semi-oval, rectangular or a simple polygon. The choice of shape can be adapted by the person skilled in the art depending on the desired configuration.

According to embodiments of the present invention, at least two separate lengths of conducting material are added along the tire's circumference. The number of lengths of conducting material can be adapted for example to the discharging needs of the tire.

According to embodiments of the present invention, the lengths of conducting material are evenly distributed along the circumference of the tire, in order to promote for example homogeneity of discharging and mechanical properties of the tire.

According to embodiments of the present invention, the lengths of conducting material on at least one of the tire sidewalls are evenly distributed along the circumference of the tire. The lengths of conducting material can be applied on one axial side of the tire or on both axial sides of

According to embodiments of the present invention, the lengths of conducting material on one of the tire sidewalls oppose the lengths of conducting material of the other tire sidewall.

According to embodiments of the present invention, the lengths of conducting material of one of the tire sidewalls and the lengths of conducting material of the other tire sidewall are interdigitated along the opposing tire sidewalls. The different embodiments can be adapted depending on the required discharging frequency or other discharging properties.

According to embodiments of the present invention, the conducting materials after curing have a total ground contacting surface area of at least 150 mm², in order to provide a sufficient ground contacting area to reduce the resistance to the flow of charge through the conducting material.

According to embodiments of the present invention, the material of the first layer comprises less than 0.5 pphr carbon black. Reducing the amount of carbon black for example reduces the risk of leaving marks on the ground, creating a non-marking tire.

According to embodiments of the present invention, the material of the first layer comprises less than 0.2 pphr carbon black.

According to embodiments of the present invention, the electric resistivity of the material of the first layer is above 10¹⁰ Ωcm. The use of carbon black as a reinforcing material for elastomers is well known in the art. However, since carbon black leaves undesired black marks on the floor, its concentration is to be limited. It is another well-known fact that reducing the amount of carbon black as a reinforcing filling material in the first layer also tends to increase the electric resistivity of the first layer. The electric resistivity of the non-conducting material, for example the first layer material, should be measured according to ISO 2878.

According to embodiments of the present invention, the material of the first layer comprises between 30 pphr and 60 pphr reinforcing material.

According to embodiments of the present invention, the material of the first layer comprises 50 pphr reinforcing material.

According to embodiments of the present invention, the reinforcing filling material comprises a non-marking reinforcing filling material.

According to embodiments of the present invention, the reinforcing filling material comprises silica. Substituting an amount of carbon black as a reinforcing filling material with silica has several advantageous effects, for example reducing the rolling resistance of the tire.

According to embodiments of the present invention, the non-marking reinforcing filling material comprises a white non-marking reinforcing filling material.

According to embodiments of the present invention, the added conducting material has an elastic modulus comparable to, for example substantial equal to or even equal to, the elastic modulus of the material of the first layer, for example in order to optimise load distribution across the tire.

According to embodiments of the present invention, the added conducting material has an electric resistivity less than that of the material of the first layer, for example non-conducting material, for example the first layer material. In preference, the electric resistivity of the conducting material is less than 10¹⁰ Ωcm, measured according to the ISO 2878 standard.

According to embodiments of the present invention, a further cylindrical layer, the second cylindrical layer, of a second material is provided. The second cylindrical layer extends in circumferential direction of the tire and comprises a second outer circumferential surface, wherein along the second outer circumferential surface the first layer of the first material is provided in such a way that the first inner circumferential surface of the first layer runs along the second outer circumferential surface. The material of the second layer has a smaller electrical resistance than the material of the first layer and the conducting material extends at least up to the second layer. Although the presence of the first layer only will be sufficient for some applications, the tire may comprise more than one layer. Thereby the material used for building the first and second layer may be the same or different. The second material serves a typical function of the tire's design, as known by the person skilled in the art and any material adapted thereto can be used. The material of the second layer can for example comprise relatively soft rubber with good dynamic and resilient properties. The material of the second layer can for example comprise carbon black, since it does not contact the ground and can therefore leave no marks on the floor. The use of carbon black moreover combines good conducting properties with good dynamic and resilient properties. The conductivity of the material of the second layer is however not critical for the invention. When the second material of the second layer is not sufficiently conducting for discharging unwanted electric charges to the ground or when an increased discharge of such charges is desired, the lengths of conducting material are extended through the second layer so that the conducting material contacts the electrically conducting means, such as for example the rim.

According to embodiments of the present invention, the material of the second layer comprises a curable material which is uncured when applied to the uncured preliminary tire.

According to embodiments of the present invention, the material of the second layer comprises a cylindrical metal plate, designed to be mounted to the rim of the tire and thus to the electrical conducting means by any means known to the person skilled in the art. Such a tire is a press-on tire and for example comprises at least one layer of rubber bonded to the metal plate.

According to embodiments of the present invention, the second layer comprises a second inner circumferential surface on a side of the second layer opposite the second outer circumferential surface, wherein a third cylindrical layer of a third material is applied beneath the second layer in circumferential direction of the tire. The third layer comprises a third outer circumferential surface that runs along the second inner circumferential surface and wherein the third layer is in electrical connection with the second layer and the electrically conducting means of the wheel. The material of the third layer preferably comprises for example a hard rubber to ensure a firm mounting to the wheel, more preferably the rim. In case no third layer is present, the material of the third layer could be used for the second layer.

According to embodiments of the present invention, the conducting material extends from the third layer, along the first and the second layer up to the outer surface of the first outer circumferential surface so that the conducting material is electrically connected to the third layer after curing. Although the conducting material can fully extend through the third layer to contact the electrically conducting means, it is sufficient for the conducting material to extend up to the third outer circumferential surface if the material of the third layer is sufficiently electrically conducting to conduct unwanted electric charges from the electrically conducting means towards the ground and is in electrical connection with the electrically conducting means of the wheel. Since the material of the third layer does not contact the ground, carbon black may be used as a reinforcing filling material, preferably providing the third layer with a sufficient electrical conductivity to permit the conducting of unwanted electrical charges to the ground along material of the second layer if it is sufficiently conducting and/or the applied lengths of conducting material.

According to embodiments of the present invention, the third layer may for example comprise a metal plate which is then mounted to the rim and thus to the electrically conducting means of the vehicle. Such a tire is a press-on tire and comprises for example at least one layer of rubber bonded to the metal plate.

According to embodiments of the present invention, the first layer is provided for contacting the ground. It is through this contact that the electric charge will be discharged.

According to embodiments of the present invention, the conducting means is electrically interconnected with the ground.

The present invention relates to a method for producing a tire wherein the tire is a solid tire.

According to embodiments of the present invention, the conducting material added along at least one of the tire sidewalls is at least partly covered with a covering material. In the embodiments where the uncured material is cured in order to obtain the tire, the inventor has found that the addition of a covering material, on for example an interface line of the conducting material with the material of the first layer exposed to an exterior surface of the tire, which is pressed into the interface during curing, results in a smoother finishing of the exterior surfaces at the interface between conducting and non-conducting material. By adding the covering material to the outer surface of the conducting material, the covering material will be pressed against the interface lines of the conducting material and the material of the first layer.

According to embodiments of the present invention, the conducting material added along at least one of the tire sidewalls and adjacent material of the first layer are at least partly covered with the covering material. By adding the covering material as well on the outer surface of the conducting material as on the outer surface of the adjacent material of the first layer, the interface lines are more certain to be covered by the covering material.

According to embodiments of the present invention, the conducting material added along at least one of the first layer sidewalls is at least partly covered with the covering material.

According to embodiments of the present invention, the covering material is added to the outer surface of at least the conducting material, along the tire sidewall.

According to embodiments of the present invention, the covering material is added to the outer surface of at least the conducting material, along the outer circumferential surface of the first layer.

According to embodiments of the present invention, the material of the covering material is the same as the material of the first layer.

According to embodiments of the present invention, the thickness of the covering material is reduced in order to allow a flow of charge between the conducting material and the ground.

According to embodiments of the present invention, the covering material comprises a hole for example in the centre of the covering surface, in order to allow the conducting material to protrude to the surface and to allow a flow of charge between the conducting material and the ground.

According to embodiments of the present invention, the material of the covering material is the same as the conducting material.

According to embodiments of the present invention, the shape of the covering material is at least semi-oval, rectangular or a simple polygon.

Other details and advantages of the method of to the invention will become apparent from the enclosed figures and description of preferred embodiments of the invention.
Figure 1 shows a cross section of a tire according to the invention having tree layers mounted to a rim.
Figures 2a, 2b and 2c show embodiments of the invention in a radial view wherein the conducting material has a semi-circular cross-sectional shape.
Figure 2d shows the embodiment of figure 2c in a circumferential view.
Figures 3a, 3b and 3c shows embodiments of the invention in a radial view wherein the conducting material has a semi-oval cross-sectional shape.
Figure 3d shows the embodiment of figure 3c in a circumferential view.
Figures 4a, 4b and 4c show embodiments of the invention in a radial view wherein the conducting material has a triangular cross-sectional shape.
Figure 4d shows the embodiment of figure 4c in a circumferential view.
Figures 5a, 5b and 5c show embodiments of the invention in a radial view wherein the conducting material has a rectangular cross-sectional shape.
Figure 5d shows the embodiment of figure 5c in a circumferential view.
Figures 6a, 6b and 6c show embodiments of the invention in a radial view wherein according to the present method a non-conducting covering material has been added to at least the conducting material along the tire sidewall in order to obtain the tire as shown.
Figure 6d shows the embodiment of figure 6c in a circumferential view.
Figures 7a, 7b and 7c show embodiments of the invention in a radial view wherein the covering material as shown in the embodiments of figures 6 has been added to the conducting material along the tire sidewall in order to obtain the tire as shown.
Figure 7d shows the embodiment of figure 7c in a circumferential view.
Figures 8a, 8b and 8c show embodiments of the invention in a radial view wherein a conducting covering material has been applied to at least the conducting material along the tire sidewall.
Figure 8d shows the embodiment of figure 8c in a circumferential view.
Figures 9a, 9b and 9c show embodiments of the invention in a radial view wherein the conducting covering material has been applied as well on the tire sidewall, as to the outer circumferential surface of the first layer.
Figure 9d shows the embodiment of figure 9c in a circumferential view.
Figures 10a, 10b and 10c show embodiments of the invention in a radial view wherein a covering material, for example non-conducting material, has been added to the tire sidewalls according to the method of the present invention as shown in the embodiments of figures 6 or 7 and wherein a conducting covering material has been applied on the outer circumferential surface of the first layer.
Figure 10d shows the embodiment of figure 10c in a circumferential view.
Figures 11a, 11b and 11c show embodiments of the invention in a radial view wherein the covering material applied to the outer circumferential surface according to the embodiments in figure 10, is for example a non-conducting material.
Figure 11d shows the embodiment of figure 11c in a circumferential view comprising first and second layers.
Figures 12a, 12b and 12c show embodiments of the invention in a radial view wherein the covering material applied along the outer circumferential surface of the first layer according to the embodiments of figure 10, is circular shaped.
Figure 12d shows the embodiment of figure 12c in a circumferential view.
Figures 13a, 13b and 13c show embodiments of the invention in a radial view wherein the covering material applied along the outer circumferential surface of the first layer according to the embodiments of figure 11, is circular shaped.
Figure 13d shows the embodiment of figure 13c in a circumferential view.
Figures 14a, 14b and 14c show embodiments of the invention in a radial view wherein the covering material applied along the outer circumferential surface of the first layer according to the embodiments of figure 13, is provided with a hole.
Figure 14d shows the embodiment of figure 14c in a circumferential view comprising first and second layers.
Figures 15a, 15b and 15c show embodiments of the invention in a radial view wherein the conducting material is applied along the tire surface, throughout the first layer.
Figure 15d shows the embodiment of figure 15c in a circumferential view.
Figures 16 to 18 show different embodiments of the invention in an axial view on the tire comprising first and second layers.

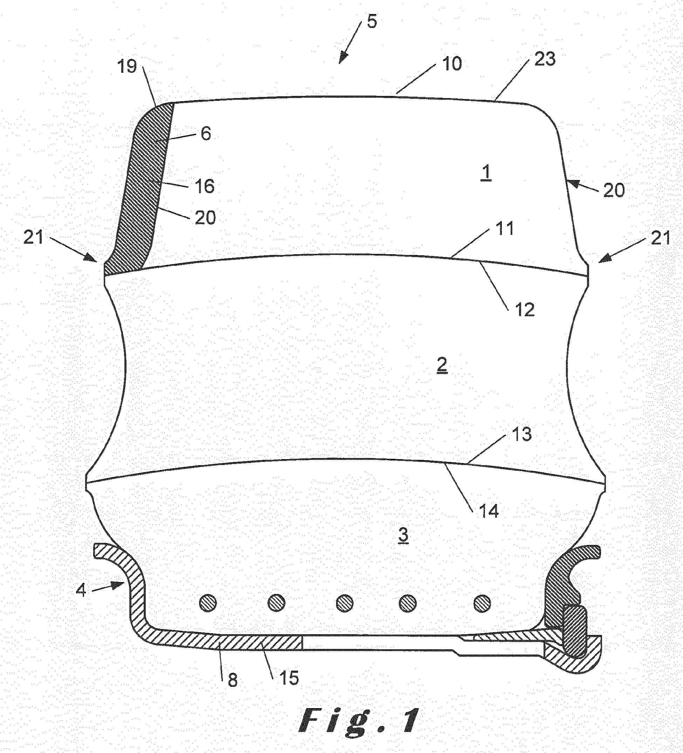

The present invention relates to a method for producing a tire 5 for a wheel 4 for a vehicle comprising electrical conducting means 15, as shown in figure 1. The wheel 4 is suitable for use with any vehicle known to the person skilled in the art, such as for example fork lift trucks, especially when the tire is a solid tire.

According to this invention, a method is provided for making a non-marking anti-static solid tire 5 for a vehicle wheel 4, comprising electrically conducting means 15, the tire 5 comprising a tread surface 23 delimited by two opposing tire sidewalls 21. The method comprises the consecutive steps of:
- making a preliminary tire comprising a first layer 1 which extends in circumferential direction of the tire. The first layer 1 comprises an outer circumferential surface 10 and an inner circumferential surface 11 interconnected by opposing first layer sidewalls 20 together delimiting the first layer 1. The first layer is made of a first material containing a reinforcing filling material.
- adding a conducting material 16 which has an electrical resistance which is smaller than the electrical resistance of the first layer 1. The conducting material is added along the tire sidewall 21 from the inner circumferential surface 11 of the first layer 1 towards the outer circumferential surface 10 of the first layer 1, so that the conducting material 16 can be electrically connected to the electrically conducting means 15 of the wheel 4 and so that the respective first layer sidewalls 20 become part of the respective tire sidewalls 21.

The first material for example comprises less than 2 pphr carbon black and at least 30 pphr reinforcing filling material. A length of conducting material 16 is added along for example the first layer sidewall 20 of the tire sidewall 21, for example by cutting away a piece of first layer material, which extends from at least a first inner circumferential surface 11 of the first layer through the first layer 1 up to a first outer circumferential surface 10 of the first layer 1, and by adding the material along the cut first layer sidewall. In the final tire 5 the added conducting material 16 will be at least partly enveloped by the material of the first layer, for example non-conducting material, forming one structural entity. This way the conducting material 16 has a ground contacting surface 19, which is electrically connectable to the electrically conducting means 15 of the wheel 4.

The use of carbon black as a reinforcing filling material for elastomers is well known in the art. However, since carbon black leaves undesired black marks on the floor, sometimes its concentration is for example limited to below 2 pphr and a non-marking reinforcing filling material is used beside the carbon black. As non-marking reinforcing filling material white reinforcing filling materials are used, preferably silica. The use of non-marking reinforcing filling materials and the reduced concentration of conducting carbon black in the tire 5 however may increase the electrical resistance. The electrical resistance of the material of the first layer 1 as described above is for example larger than 10¹⁰ Ωcm. The first material for example comprises less than 0.5 pphr of carbon black, more preferably less than 0.2 pphr carbon black. However, not only non-marking tires have relatively large electrical resistances. It is well know from the state of the art that in order to improve the balance between rolling resistance versus wet traction, tread compositions are made with lower carbon black loadings. Such compositions may cause the tire 5 to have a higher electrical resistance Which may interfere with charge dissipation and result in static charge accumulation. Although the exact composition of the material of the first layer 1 is not critical for the invention, the composition of the material of the first layer 1 preferably is chosen in function of the mechanical properties to be achieved since the first layer 1 will contact the ground.

In order to provide a connexion between the conducting means 15 and the ground, conducting material 16 is added along for example the first layer sidewall 20. A length of uncured conducting material 16 is added along for example the first layer sidewall 20 of the tire sidewall 21, for example by cutting away a piece of first layer material, and by applying the material along the cut first layer sidewall. Removing part of the material of the first layer can be done in any way known to the person skilled in the art. The material can for example be cut away, molten away, burned away, pushed away, etc. The material of the first layer of the preliminary tire, for example non-conducting material, is an uncured material at the time the material is being removed. The added conducting material 16 can be an uncured material or a cured material or an incurable material. Alternatively, the length of conducting material 16 could be applied along for example the first layer sidewall 20 of the tire sidewall 21, without cutting away a piece of first layer material. In this optic the conducting material 16 will enter the material of the preliminary tire, for example the material of the first layer which can be non-conductive, only during the curing process and has the added advantage of wasting less material with respect to the process where part of the material of the first layer, for example non-conducting material, is removed. In both alternatives the conducting material 16 in the finished tire 5 will have formed conducting paths 6. The uncured curable material has to be cured in order to obtain the finished tire. When curing must be executed, the paths 6, created before curing for example by cutting away a piece of material from the first layer 1, for example non-conducting material, or created during curing for example where the conducting material 16 is added along the uncut preliminary tire, will have be present after curing. In the final tire the lengths of conducting material 16 applied to the tire 5 are the paths 6 of the tire 5.

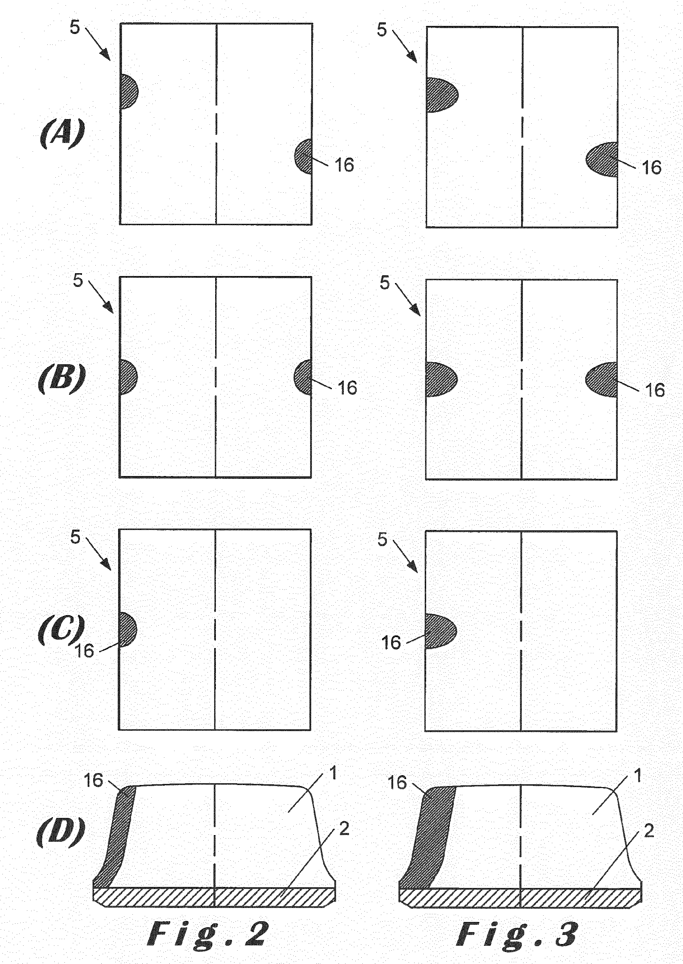

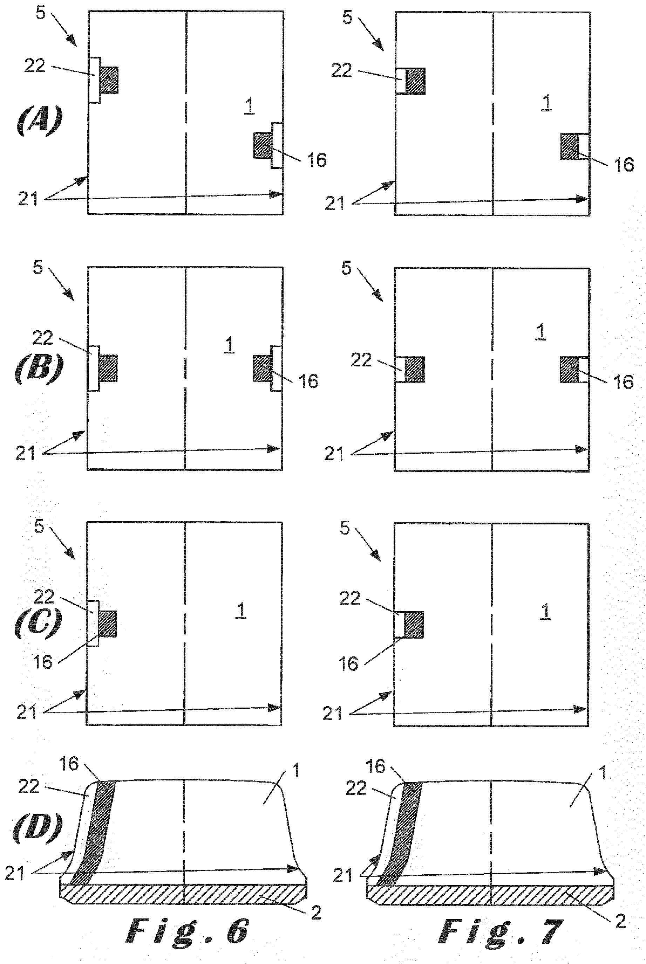

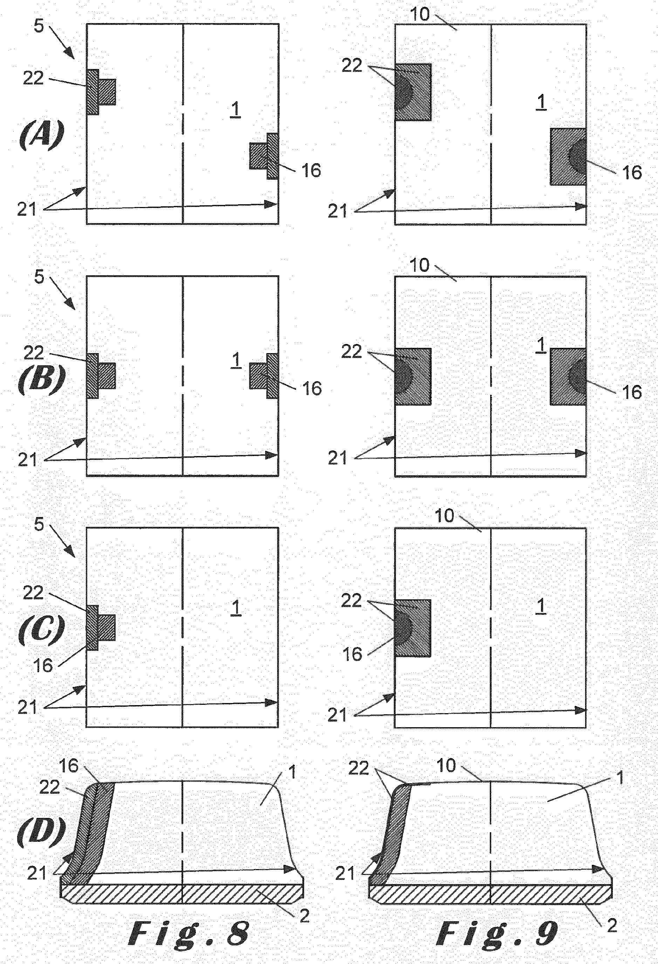

The length of conducting material 16 preferably extends in radial direction of the tire 5, more preferably linearly from the first inner circumferential surface 11 towards the first outer circumferential surface 10. In one exemplary embodiment, a part of the first layer 1 is removed in the form of a straight, preferably radially extending path 6, which extends from the first inner circumferential surface 11 up to the first outer circumferential surface 10. A radially extending linear length of conducting material 16 appears to provide optimum discharge of undesired electrical charges. According to several embodiments of the invention, the cross-sectional shape of the conducting material 16 can be such as circular, triangular, oval, rectangular or a simple polygon. The choice of shape can be adapted by the person skilled in the art depending on the desired configuration. Figures 2 to 5 provide drawings of different possible cross-sectional shapes for the length of conducting material. Figures 2, 3, 4 and 5 disclose respectively cross-sectional shapes circular, oval, triangular and rectangular. In the embodiments of figures 6, 7, 8, 10, 11, 12, 13 and 14, the shape of conducting material is rectangular, whereas the embodiment in figure 9 comprises a semi-circular shape.

The total ground contacting surface 19 of the lengths of conducting material 16 for example has a surface area of at least 150 mm². The presence of a large ground contacting surface area increases the possibility of discharging unwanted electrical charges from the vehicle towards the ground. To limit the risk that marks are left on the floor by the conducting materials 16, the total ground contacting surface 19 has a surface area preferably smaller than 500 mm².

The addition of the conducting material 16 preferably takes place under atmospheric pressure. The conducting material 16 can for example be manually inserted into the path 6 after having removed a piece of material of the first layer, for example non-conducting material. The manual application is however not critical for the invention and the conducting material 16 can for example also be mechanically inserted. The conducting material 16 can be any material deemed appropriate by the person skilled in the art but preferably is chosen in function of the composition of the material of the first layer 1 and the desired mechanical characteristics. It has been found by the inventor that a conducting material with an elastic modulus comparable to that of the material of the first layer, for example non-conducting material, is preferable. Preferably, the conducting material 16 comprises carbon black since carbon black renders the conducting material 16 sufficiently conducting to discharge unwanted electric charges to the ground and offers the conducting material good mechanical properties. The conducting material 16 preferably is provided in the form of a solid body, more preferably a plastic deformable solid body. The composition of the conducting material is however not critical for the invention and can for example be in the form of a paste. The dimensions of the solid body are preferably adapted to the dimensions of the path 6 that must be obtained.

On the outer circumferential layer 10 of the first layer 1 preferably a tread pattern 23 is provided to the tire 5 comprising ribs delimited by grooves. The ground contacting surface 19 of the conducting material 16 preferably is provided on a rib of the tread pattern so that the ground contacting surface 19 can more easily contact the ground.

The resulting tire 5 is then mounted to a rim 8 to form the wheel 4 in such a way that the conducting material 16 contacts the electrical conducting means 15 of the wheel 4, for example the wheel rim 8. Any method known to the person skilled in the art can be used to mount the first layer 1 to the rim 8 of the wheel such as for example clamping the first layer 1 between different parts of the rim 8. The electrical conducting means 15 comprise any electrically conducting means which can be mounted to a vehicle, such as a rim 8 of a wheel parts of the engine, the frame, etc. The conducting material 16 preferably is electrically connected to the electrical conducting means 15 after mounting the tire 5 to the wheel 4 of the vehicle. More preferably, the conducting material 16 is electrically connected to the rim 8 of the wheel after mounting the tire 5 to the rim 8. The conducting material 16 can contact the rim 8 directly or can be electrically connected to the rim 8 by intermediate parts such as for example different layers of the tire 5 conducting the unwanted electrical charges to the ground.

Although the presence of the first layer 1 only will be sufficient for some applications, the tire 5 may comprise more than one layer. Thereby the material used for building the first and second layer may be the same or different. The tire 5 of the present invention in that case is produced by providing a second cylindrical layer 2 which extends in circumferential direction of the tire 5, and thereafter providing on top of this second layer 2 the first layer 1 forming the tread surface 23. The second layer 2 comprises a second outer circumferential surface 12, the inner circumferential surface 11 of the first layer 1 runs along the second outer circumferential surface 12 and the conducting material 16 extends at least up to the second outer surface 12. The second layer 2 can comprise any second material known to the person skilled in the art.

The length of conducting material 16 may fully extend through the first layer 1 and the second layer 2 and may directly contact the electrically conducting means 15. However it may be sufficient for the conducting material 16 to extend up to the second outer circumferential surface 12, if the material of the second layer 2 has an electrical resistance which allows unwanted electric charges to be conducted from the electrically conducting means 15 towards the conducting material 16 along the material of the second layer 2. In such an embodiment, the electrical resistance of the material of the second layer 2 preferably is smaller than the electrical resistance of the material of the first layer 1.

The material of the second layer preferably comprises relatively soft rubber with good dynamic and resilient properties. The material of the second layer 2 can for example comprise carbon black since it does not contact the ground and can therefore leave no marks on the floor. The use of carbon black moreover combines good conducting properties with good dynamic and resilient properties.

The conductivity of the material of the second layer 2 is however not critical for the invention. When the second material of the second layer 2 is not sufficiently conducting for discharging unwanted electric charges to the ground or when an increased discharge of such charges is desired, the conducting material 16 is extended through the second layer 2 and preferably extends up to a second inner circumferential surface 13 with the conducting material 16 preferably extending up to the second inner circumferential surface 13 so that the conducting material contacts the electrically conducting means 15, such as for example the rim 8, when the tire 5 is mounted to the rim 8.

Similarly a third layer 3 can be applied beneath the second layer 2 in circumferential direction of the tire 5, the third layer 3 comprising a third material and a third outer circumferential surface 14 running along the second inner circumferential surface 13.

Although the conducting material 16 can fully extend through the third layer 3 to contact the electrically conducting means 15, it is sufficient for the conducting material 16 to extend up to the third outer circumferential surface 14 if the material of the third layer 3 is sufficiently electrically conducting to conduct unwanted electric charges from the electrically conducting means 15 towards the ground and is in electrical connection with the electrically conducting means 15 of the wheel 4. The material of the third layer 3 preferably comprises a hard rubber to ensure a firm mounting to the wheel 4, more preferably the rim 8. Since the material of the third layer 3 does not contact the ground, carbon black may be used as a reinforcing filling material, preferably providing the third layer 3 with a sufficient electrical conductivity to permit conducting unwanted electrical charges to the ground along material of the second layer 2 and/or the conducting material 16.

The material used to produce the first, second and third layer may be the same or different. Additional layers can still be added beneath the third layer, this is however not critical for the invention and the shape of the additional layer can be determined by the person skilled in the art.

Although the conducting material 16 may extend through all the layers provided beneath the first layer 1 for conducting the unwanted electrical charges from the electrically conducting means 15 up to the ground, the conducting material 16 preferably only extends through the first layer 1 when the material of the underlying layers are sufficiently conducting to discharge the unwanted charges towards the ground. Limiting the length of the conducting material 16 improves the homogeneity of the layered structure of the tire 5, thus improving homogeneous wearing of the tire 5 and improving the homogeneity of the mechanical properties of the tire 5. Decreasing the length of the conducting material 16 also decreases the amount of material that needs to be removed from the layers in certain embodiments, decreasing the time needed to make a tire 5 and decreasing loss of material caused by the removal.

Figures 2 to 15 provide drawings of preferred embodiments of the tire according to different views. Parts a, b and c provide drawings in the radial plane of the tire 5, whereas part d of figures 2 to 15 shows a circumferential cross-section of the first 1 and second layer 2 of the tire 5.

Figures 2 to 5 provide drawings of different possible cross-sectional shapes for the path 6. Figures 2, 3, 4 and 5 disclose respectively cross-sectional shapes circular, oval, triangular and rectangular.

Figure 2a shows a first embodiment of the invention in a radial view wherein the conducting material 16 has a semi-circular cross-sectional shape and is applied on both sides of axial symmetry of the tire 5 in an interdigited configuration.

Figure 2b shows a second embodiment of the invention in a radial view wherein the conducting material 16 has an semi-circular cross-sectional shape and is applied on both sides of axial symmetry of the tire 5 in an opposed configuration.

Figure 2c shows a third embodiment of the invention in a radial view wherein the conducting material 16 has a semi-circular cross-sectional shape and is applied on one side of axial symmetry of the tire 5.

Figure 2d shows the embodiment of figure 2c in a circumferential view comprising first 1 and second layers 2.

Figure 3a shows a fourth embodiment of the invention in a radial view wherein the conducting material 16 has a semi-oval cross-sectional shape and is applied on both sides of the tire 5 in an interdigited configuration.

Figure 3b shows a fifth embodiment of the invention in a radial view wherein the conducting material 16 has a semi-oval cross-sectional shape and is applied on both sides of axial symmetry the tire 5 in an opposed configuration.

Figure 3c shows a sixth embodiment of the invention in a radial view wherein the conducting material 16 has a semi- oval cross-sectional shape and is applied on one side of axial symmetry of the tire 5.

Figure 3d shows the embodiment of figure 3c in a circumferential view comprising first and second layers.

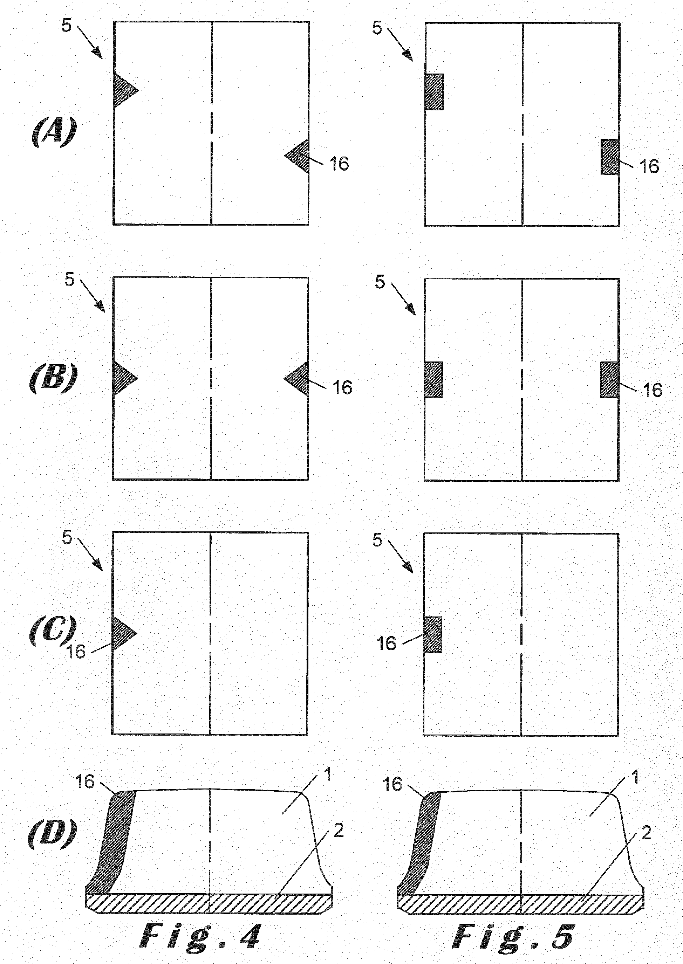

Figure 4a shows a seventh embodiment of the invention in a radial view wherein the conducting material 16 has a triangular cross-sectional shape and is applied on both sides of axial symmetry of the tire 5 in an interdigited configuration.

Figure 4b shows a eighth embodiment of the invention in a radial view wherein the conducting material 16 has a triangular cross-sectional shape and is applied on both sides of axial symmetry of the tire 5 in an opposed configuration.

Figure 4c shows a ninth embodiment of the invention in a radial view wherein the conducting material 16 has a triangular cross-sectional shape and is applied on one side of axial symmetry of the tire 5.

Figure 4d shows the embodiment of figure 4c in a circumferential view comprising first and second layers.

Figure 5a shows a tenth embodiment of the invention in a radial view wherein the conducting material 16 has a rectangular cross-sectional shape and is applied on both sides of axial symmetry of the tire 5 in an interdigited configuration.

Figure 5b shows an eleventh embodiment of the invention in a radial view wherein the conducting material 16 has a rectangular cross-sectional shape and is applied on both sides of axial symmetry of the tire 5 in an opposed configuration.

Figure 5c shows a twelfth embodiment of the invention in a radial view wherein the conducting material 16 has a rectangular cross-sectional shape and is applied on one side of axial symmetry of the tire 5.

Figure 5d shows the embodiment of figure 5c in a circumferential view comprising first and second layers.

Figure 6a shows a thirteenth embodiment of the invention in a radial view wherein the conducting material 16 has a covering material 22, other than the conducting material 16, added to at least the conducting material along the tire sidewall 21, applied to both of the tire sidewalls 21 in an interdigited configuration. In the final tire, the material of the covering material 22, for example non-conducting material, is merged with the first layer material 1 if the same material is used.

Figure 6b shows a fourteenth embodiment of the invention in a radial view wherein the conducting material 16 has a covering material 22, other than the conducting material 16, added to at least the conducting material 16 along the tire sidewall 21, added to both of the tire sidewalls 21 in an opposed configuration. In the final tire, the material of the covering material 22, for example non-conducting material, is merged with the first layer material 1 if the same material is used.

Figure 6c shows a fifteenth embodiment of the invention in a radial view wherein the conducting material 16 has a covering material 22, other than the conducting material 16, added to at least the conducting material 16 along the tire sidewall 21, added to one of the tire sidewalls 21. In the final tire, the material of the covering material 22, for example non-conducting material, is merged with the first layer material 1 if the same material is used.

Figure 6d shows the embodiment of figure 6c in a circumferential view comprising first and second layers.

Figure 7a shows a sixteenth embodiment of the invention in a radial view wherein the conducting material 16 has a covering material 22, other than the conducting material 16, added to the conducting material 16 along the tire sidewall 21, applied to both of the tire sidewalls 21 in an interdigited configuration. In the final tire, the material of the covering material 22, for example non-conducting material, is merged with the first layer material 1 if the same material is used.

Figure 7b shows a seventeenth embodiment of the invention in a radial view wherein the conducting material 16 has a covering material 22, other than the conducting material 16, added to the conducting material 16 along the tire sidewall 21, applied to both of the tire sidewalls 21 in an opposed configuration. In the final tire, the covering material 22, for example non-conducting material, is merged with the first layer material 1 if the same material is used.

Figure 7c shows an eighteenth embodiment of the invention in a radial view wherein the conducting material 16 has a covering material 22, other than the conducting material 16, added to the conducting material 16 along the tire sidewall 21, applied to one of the tire sidewalls 21. In the final tire, the covering material 22, for example the non-conducting material, is merged with the first layer material 1 if the same material is used.

Figure 7d shows the embodiment of figure 7c in a circumferential view comprising first and second layers.

Figure 8a shows a nineteenth embodiment of the invention in a radial view wherein the conducting material 16 has a covering material 22, made out of the conducting material 16, applied to at least the conducting material 16 along the tire sidewall 21, applied to both of the tire sidewalls 21 in an interdigited configuration. In the final tire, the conducting material of the covering material 22 is merged with the conducting material 16 if the same material is used.

Figure 8b shows a twentieth embodiment of the invention in a radial view wherein the conducting material has a covering material 22, made out of the conducting material 16, applied to at least the conducting material 16 along the tire sidewall 21, applied to both of the tire sidewalls 21 in an opposed configuration. In the final tire, the conducting material of the covering material 22 is merged with the conducting material 16 if the same material is used.

Figure 8c shows a twenty first embodiment of the invention in a radial view wherein the conducting material 16 has a covering material 22, made out of the conducting material 16, applied to at least the conducting material 16 along the tire sidewall 21, applied to one of the tire sidewalls 21. In the final tire, the conducting material of the covering material 22 is merged with the conducting material 16 if the same material is used.

Figure 8d shows the embodiment of figure 8c in a circumferential view comprising first and second layers.

Figure 9a shows a twentieth second embodiment of the invention in a radial view wherein the conducting material 16 has a covering material 22, made out of the conducting material 16, applied to at least the conducting material 16 along the tire sidewall 21 and to at least the conducting material 16 along the outer circumferential surface 10 of the first layer 1, applied to both of the tire sidewalls 21 in an interdigited configuration. The shape of the covering material 22 applied on the outer circumferential surface 10 of the first layer 1 is rectangular. In the final tire, the conducting material of the covering material 22 is merged with the conducting material 16 if the same material is used.

Figure 9b shows a twenty third embodiment of the invention in a radial view wherein the conducting material 16 has a covering material 22, made out of the conducting material 16, applied to at least the conducting material 16 along the tire sidewall 21 and to at least the conducting material 16 along the outer circumferential surface 10 of the first layer 1, applied to both of the tire sidewalls 21 in an opposed configuration. The shape of the covering material 22 applied on the outer circumferential surface 10 of the first layer 1 is rectangular. In the final tire, the conducting material of the covering material 22 is merged with the conducting material 16 if the same material is used.

Figure 9c shows a twenty fourth embodiment of the invention in a radial view wherein the conducting material 16 has a covering material 22, made out of the conducting material 16, applied to at least the conducting material 16 along the tire sidewall 21 and to at least the conducting material 16 along the outer circumferential surface 10 of the first layer 1, applied to one of the tire sidewalls 21. The shape of the covering material 22 applied on the outer circumferential surface 10 of the first layer 1 is rectangular. In the final tire, the conducting material of the covering material 22 is merged with the conducting material 16 if the same material is used.

Figure 9d shows the embodiment of figure 9c in a circumferential view comprising first and second layers.

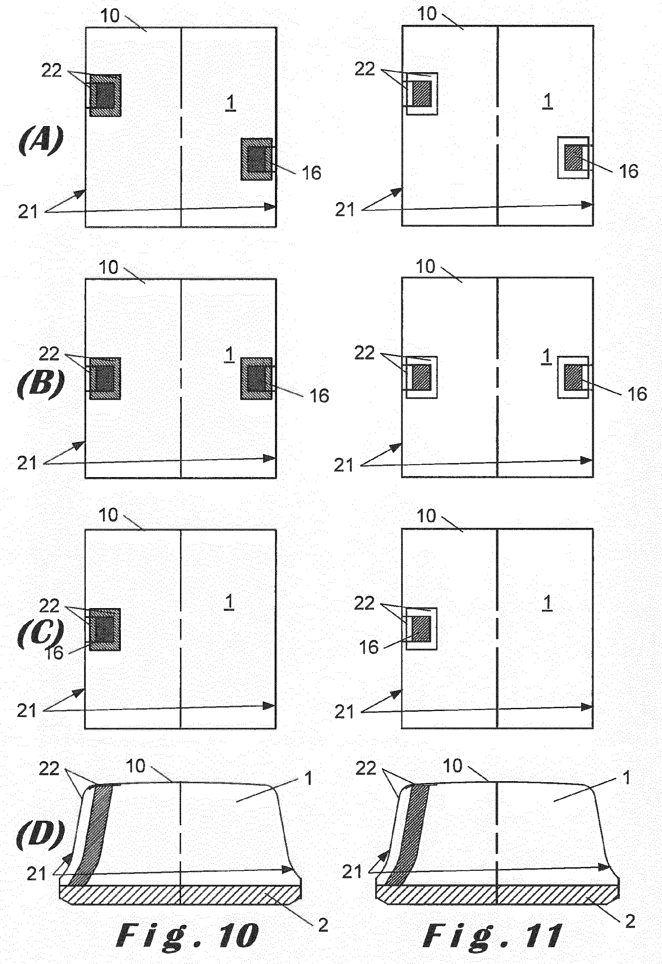

Figure 10a shows a twenty fifth embodiment of the invention in a radial view wherein the conducting material 16 has a first covering material 22, made out of the conducting material 16, applied to at least the conducting material 16 along the outer circumferential surface 10 of the first layer 1, and a second covering material 22, other than the conducting material 16, added according to the method to the conducting material 16 along the tire sidewall 21, applied to both sides of the axial symmetry of the tire 5 in an interdigited configuration. In the final tire 5, the material of the covering material 22, for example non-conducting material, is merged with the first layer material 1 if the same material is used. In the final tire, the conducting material of the covering material 22 is merged with the conducting material 16 if the same material is used. The shape of the covering material 22 applied on the outer circumferential surface 10 of the first layer 1 is rectangular.

Figure 10b shows a twenty sixth embodiment of the invention in a radial view wherein the conducting material 16 has a first covering material 22, made out of the conducting material 16, applied to at least the conducting material 16 along the outer circumferential surface 10 of the first layer 1, and a second covering material 22, other than the conducting material 16, added according to the method to the conducting material 16 along the tire sidewall 21, applied to both sides of the axial symmetry of the tire 5 in an opposed configuration. In the final tire 5, the material, for example non -conductive, of the covering material 22 is merged with the first layer material 1 if the same material is used. In the final tire, the conducting material of the covering material 22 is merged with the conducting material 16 if the same material is used. The shape of the covering material 22 applied on the outer circumferential surface 10 of the first layer 1 is rectangular.

Figure 10c shows a twenty seventh embodiment of the invention in a radial view wherein the conducting material 16 has a first covering material 22, made out of the conducting material 16, applied to at least the conducting material 16 along the outer circumferential surface 10 of the first layer 1, and a second covering material 22, other than the conducting material 16, added according to the method to the conducting material 16 along the tire sidewall 21, applied to one side of the axial symmetry of the tire 5. In the final tire 5, the covering material 22, for example non-conducting material, is merged with the first layer material 1 if the same material is used. In the final tire, the conducting material of the covering material 22 is merged with the conducting material 16 if the same material is used. The shape of the covering material 22 applied on the outer circumferential surface 10 of the first layer 1 is rectangular.

Figure 10d shows the embodiment of figure 10c in a circumferential view comprising first and second layers.

Figure 11a shows a twenty eighth embodiment of the invention in a radial view wherein the conducting material 16 has a first covering material 22, other than the conducting material 16, applied to at least the conducting material 16 along the outer circumferential surface 10 of the first layer 1, and a second covering material 22, other than the conducting material 16, added according to the method to the conducting material 16 along the tire sidewall 21, applied to both sides of axial symmetry of the tire 5 in an interdigited configuration. In this embodiment the thickness of the covering material 22 applied on the outer circumferential surface 10 of the first layer 1 is reduced in order to allow the flow of charge between the conducting material 16 and the ground. In the final tire, the covering material 22, for example non-conductive, is merged with the first layer material 1 if the same material is used. The shape of the covering material 22 applied on the outer circumferential surface 10 of the first layer 1 is rectangular.

Figure 11b shows a twenty ninth embodiment of the invention in a radial view wherein the conducting material 16 has a first covering material 22, other than the conducting material 16, applied to at least the conducting material 16 along the outer circumferential surface 10 of the first layer 1, and a second covering material 22, other than the conducting material 16, added according to the method to the conducting material 16 along the tire sidewall 21, applied to both sides of axial symmetry of the tire 5 in an opposed configuration. In this embodiment the thickness of the covering material 22 applied on the outer circumferential surface 10 of the first layer 1 is reduced in order to allow the flow of charge between the conducting material 16 and the ground. In the final tire 5, the material of the covering material 22, which can be non-conductive, is merged with the first layer material 1 if the same material is used. The shape of the covering material 22 applied on the outer circumferential surface 10 of the first layer 1 is rectangular.

Figure 11c shows a thirtieth embodiment of the invention in a radial view wherein the conducting material 16 has a first covering material 22, other than the conducting material 16, applied to at least the conducting material 16 along the outer circumferential surface 10 of the first layer 1, and a second covering material 22, other than the conducting material 16, added according to the method to the conducting material 16 along the tire sidewall 21, applied to one sides of axial symmetry of the tire 5. In this embodiment the thickness of the covering material 22 applied on the outer circumferential surface 10 of the first layer 1 is reduced in order to allow the flow of charge between the conducting material 16 and the ground. In the final tire 5, the for example non-conducting material of the covering material 22 is merged with the first layer material 1 if the same material is used. The shape of the covering material 22 applied on the outer circumferential surface 10 of the first layer 1 is rectangular.

Figure 11d shows the embodiment of figure 11c in a circumferential view comprising first and second layers.

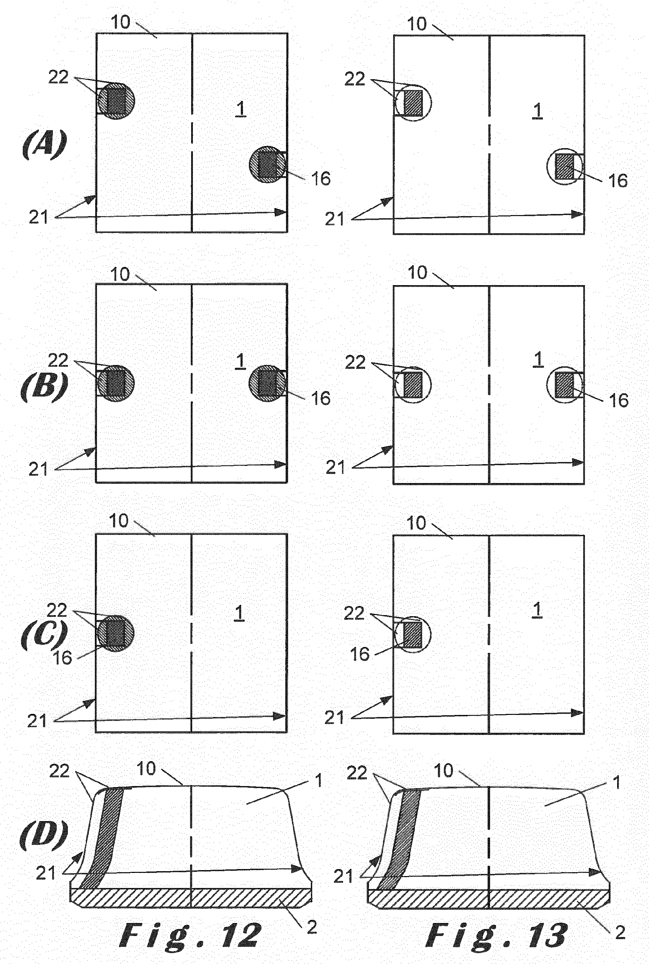

Figure 12a shows a thirty first embodiment of the invention in a radial view wherein the covering material 22 applied along outer circumferential surface 10 of the first layer 1 of the embodiment in figure 10a is provided with a round covering material 22.

Figure 12b shows a thirty second embodiment of the invention in a radial view wherein the covering material 22 applied along outer circumferential surface 10 of the first layer 1 of the embodiment in figure 10b is provided with a round covering material 22.

Figure 12c shows a thirty third embodiment of the invention in a radial view wherein the covering material 22 applied along outer circumferential surface 10 of the first layer 1 of the embodiment in figure 10c is provided with a round covering material 22.

Figure 12d shows the embodiment of figure 12c in a circumferential view comprising first and second layers.

Figure 13a shows a thirty fourth embodiment of the invention in a radial view wherein the covering material 22 applied along outer circumferential surface10 of the first layer 1 of the embodiment in figure 11a is provided with a round covering material 22.

Figure 13b shows a thirty fifth embodiment of the invention in a radial view wherein the covering material 22 applied along outer circumferential surface 10 of the first layer 1 of the embodiment in figure 11b is provided with a round covering material 22.

Figure 13c shows a thirty sixth embodiment of the invention in a radial view wherein the covering material 22 applied along outer circumferential surface 10 of the first layer 1 of the embodiment in figure 11c is provided with a round covering material 22.

Figure 13d shows the embodiment of figure 13c in a circumferential view comprising first and second layers.

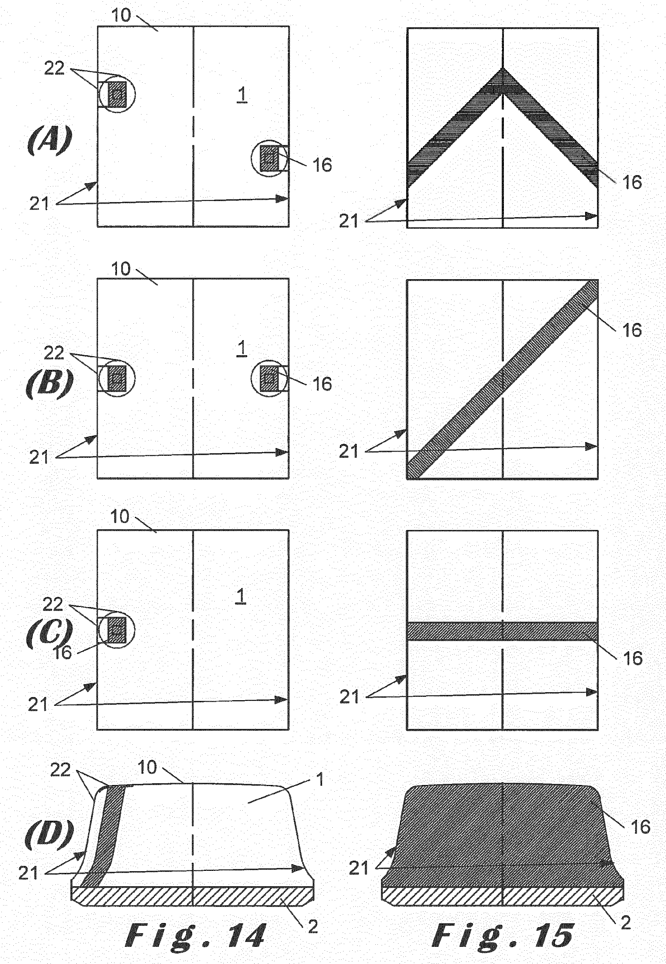

Figure 14a shows a thirty first embodiment of the invention in a radial view wherein the covering material 22 applied along outer circumferential surface 10 of the first layer 1 of the embodiment in figure 13a is provided with a hole which allows the conducting material 16 to protrude to the outer circumferential surface 10 of the first layer 1. In this embodiment in order to allow the flow of charge between the conducting material 16 and the ground a direct connexion between the conducting material 16 and the ground is provided through the hole.

Figure 14b shows a thirty second embodiment of the invention in a radial view wherein the covering material 22 applied along outer circumferential surface 10 of the first layer 1 of the embodiment in figure 13b is provided with a hole which allows the conducting material to protrude to the outer circumferential surface 10 of the first layer 1. In this embodiment in order to allow the flow of charge between the conducting material 16 and the ground a direct connexion between the conducting material 16 and the ground is provided through the hole.

Figure 14c shows a thirty third embodiment of the invention in a radial view wherein the covering material 22 applied along outer circumferential surface 10 of the first layer 1 of the embodiment in figure 13c is provided with a hole which allows the conducting material 16 to protrude to the outer circumferential surface 10of the first layer 1. In this embodiment in order to allow the flow of charge between the conducting material 16 and the ground a direct connexion between the conducting material 16 and the ground is provided through the hole.

Figure 14d shows the embodiment of figure 14c in a circumferential view comprising first and second layers.

Figure 15a shows a twenty second embodiment of the invention in a radial view wherein the conducting material 16 is applied solely along the tire sidewall 21, throughout the first layer 1, on both tire sidewalls 21 in an opposed configuration.

Figure 15b shows a twenty third embodiment of the invention in a radial view wherein the conducting material 16 is applied solely along the tire sidewall 21, throughout the first layer, on both the tire sidewalls 21 in an interdigited configuration.

Figure 15c shows an twenty fourth embodiment of the invention in a radial view wherein the conducting material 16 is applied as in figure 15a, in an opposed configuration and merely in the axial direction.

Figure 15d shows the embodiment of figure 15c in a circumferential view comprising first and second layers.

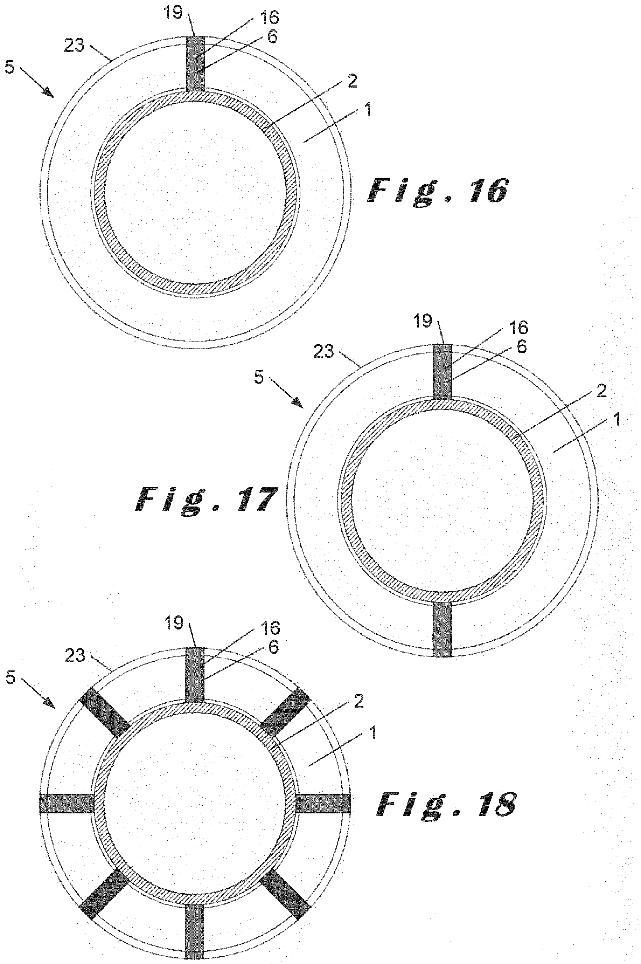

Figures 16 to 18 show an axial view of the first layer 1 and second layer 2 of the tire 5. The first layer 1 may contain one single path 6 such as shown in figure 16 or a plurality of such paths 6, such as shown in figures 17 and 18, filled with conducting material 16, if it is desired to increase the ability of the tire 5 to discharge unwanted electrical charges to the ground. The first layer may for example be provided with one, two, eight or more paths 6. Although their mutual position is not critical for the invention, the position of the respective ground contacting surfaces 19 is preferably symmetric with respect to each other and to the tread surface 23 of the tire 5 to allow unwanted electrical charges to be discharged at regular intervals and to increase the homogeneity of the tire 5. This way homogeneous wearing of the tread surface 23 may be achieved, and the homogeneity of the mechanical properties of the tire 5 is improved. Figure 17 shows such an embodiment comprising two paths 6, whereas figure 18 shows an exemplary embodiment with eight paths 6 disposed in an interdigited fashion. In order to improve discharge of unwanted electric charges to the ground without significantly increasing the risk that unwanted tire marks are left on the floor, the total surface area of the ground contacting surfaces 19 of paths 6 preferably is less than 1% of the total area of the tread surface 23. More preferably, the total area of the ground contacting surfaces 19 is less than 0.1% of the total area of the tread surface 23 of the tire 5.

## Claims

1. A method for making a non-marking anti-static solid tire (5) for a vehicle wheel (4) comprising electrically conducting means (15), the tire (5) comprising a tread surface (23) delimited by two opposing tire sidewalls (21), the method comprising the consecutive steps of:
- making a preliminary uncured curable solid tire comprising a first layer (1) which extends in circumferential direction of the tire, the first layer (1) comprising an outer circumferential surface (10) and an inner circumferential surface (11) interconnected by opposing first layer sidewalls (20) together delimiting the first layer (1) and being made of a non-marking first material containing a non-marking reinforcing filling material,
- adding along at least one of the opposing tire sidewalls (21) of the preliminary tire a conducting material (16) having an electrical resistance which is smaller than the electrical resistance of the first material, the conducting material (16) extending from the inner circumferential surface (11) of the first layer (1) towards the outer circumferential surface (10) of the first layer (1),
- curing the uncured curable preliminary tire provided with the conducting material (16) to obtain the final tire (5) wherein the conducting material (16) is electrically connected to the electrically conducting means (15) of the wheel (4) and wherein the respective first layer sidewalls (20) are part of the respective tire sidewalls (21).

2. The method according to the preceding claim, wherein the first layer (1) is provided for contacting the ground.

3. The method according to any one of the preceding claims, wherein the added conducting material (16) is an uncured curable conducting material.

4. The method according to any one of the preceding claims, wherein at least one conductive path (6) has been created in the final tire (5) which extends -at least from the inner circumferential surface (11) of the first layer (1) through the first layer (1) towards the outer circumferential surface (10) of the first layer (1).

5. The method according to the preceding claim, wherein the conductive path (6) in the final tire (5) has been created by removing at least part of the first layer (1) of the preliminary tire from the outer circumferential surface (10) of the first layer (1) through the first layer (1) towards the inner circumferential surface (11) of the first layer (1) and after creating the path (6) filling the path (6) with the conducting material (16) to obtain after curing the conductive path (6) in the final tire (5).

6. The method according to the preceding claim, wherein the path (6) in the preliminary tire is created with a first material removal tool.

7. The method according to the preceding claim where the path (6) in the preliminary tire is created with a heated first material removal tool.

8. The method according to claim 4 wherein the conductive path (6) in the final tire (5) is created during curing by adding the conductive material (16) along any of the uncut preliminary tire sidewalls before curing.

9. The method according to any one of the preceding claims, wherein the conducting materials (16) after curing have a total ground contacting surface (19) area of at least 150 mm².

10. The method according to any one of the preceding claims, wherein the conducting materials (16) after curing have a total ground contacting surface (19) area smaller than 500 mm².

11. The method according to any one of the preceding claims, wherein the non-marking first material comprises less than 0.5 pphr carbon black.

12. The method according to the preceding claim, wherein the non-marking first material comprises less than 0.2 pphr carbon black.

13. The method according to anyone of the preceding claims, wherein the electric resistivity of the non-marking first material is above 10¹⁰ Ωcm.

14. The method according to anyone of the preceding claims, wherein the non-marking first material comprises between 30 pphr and 60 pphr reinforcing filling material.

15. The method according to the preceding claim, wherein the non-marking first material comprises 50 pphr reinforcing filling material.

16. The method according to any one of the preceding claims, wherein the reinforcing filling material comprises silica.

17. The method according to any one of the preceding claim, wherein the non-marking reinforcing filling material comprises a white non-marking reinforcing filling material.

18. The method according to anyone of the preceding claims, wherein the uncured curable preliminary tire comprises a further layer (2), a second layer (2), of a second material which extends in circumferential direction of the tire (5) and which comprises a second outer circumferential surface (12), wherein along the second outer circumferential surface the first layer (1) of the first material is provided in such a way that the first inner circumferential surface (11) of the first layer runs along the second outer circumferential surface (12), the material of the second layer (2) having a smaller electrical resistance than the material of the first layer (1) and wherein the conducting material (16) extends at least up to the second layer (2).

19. The method according to the preceding claim, wherein the material of the second layer (2) comprises a cylindrical metal plate (7).

20. The method according to claim 18, wherein the second layer (2) comprises a second inner circumferential surface (13) on a side of the second layer (2) opposite the second outer circumferential surface (12), wherein a third layer (3) of a third material is added beneath the second layer (2) in circumferential direction of the tire (5), the third layer (3) comprising a third outer circumferential surface (14) running along the second inner circumferential surface (13) and wherein the third layer (3) is in electrical connection with the second layer (2) and the electrically conducting means (15) of the wheel (4).

21. The method according to the preceding claim wherein the conducting material (16) extends from the third layer (3), along the first (1) and the second layer (2) up to the outer surface of the first outer circumferential surface (10) so that the conducting material (16) is electrically connected to the third layer (3).

## Patentansprüche

1. Ein Verfahren zur Herstellung eines nicht kreidenden antistatischen Vollreifens (5) für ein Fahrzeugrad (4), welches elektrisch leitende Mittel (15) umfasst, wobei der Reifen (5) eine Lauffläche (23) umfasst, die durch zwei gegenüber liegende Reifenseitenwände (21) begrenzt ist, wobei das Verfahren die folgenden aufeinanderfolgenden Schritte umfasst:
- Herstellen eines vorläufigen nicht ausgehärteten aushärtbaren Vollreifens, welcher eine erste Schicht (1) umfasst, die sich in Umfangsrichtung des Reifens ausdehnt, wobei die erste Schicht (1) eine äußere umlaufende Oberfläche (10) und eine innere umlaufende Oberfläche (11) umfasst, die durch gegenüber liegende Seitenwände (20) der ersten Schicht miteinander verbunden sind, welche zusammen die erste Schicht begrenzen und aus einem nicht kreidenden ersten Material hergestellt sind, das ein nicht kreidendes verstärkendes Füllmaterial enthält,
- Hinzufügen entlang zumindest einer der gegenüber liegenden Reifenseitenwände (21) des vorläufigen Reifens eines leitenden Materials (16) mit einem elektrischen Widerstand, der geringer ist als der elektrische Widerstand des ersten Materials, wobei sich das leitende Material (16) von der inneren umlaufenden Oberfläche (11) der ersten Schicht (1) hin zur äußeren umlaufenden Oberfläche (10) der ersten Schicht (1) ausdehnt,
- Aushärten des nicht ausgehärteten aushärtbaren vorläufigen Reifens, welcher mit dem leitenden Material (16) versehen ist, um den endgültigen Reifen (5) zu erhalten, wobei das leitende Material (16) elektrisch mit den elektrisch leitenden Mitteln (15) des Rades (4) verbunden ist und wobei die zugehörigen Seitenwände (20) der ersten Schicht Teil der zugehörigen Reifenseitenwände (21) sind.

2. Das Verfahren nach dem vorigen Anspruch, wobei die erste Schicht (1) bereitgestellt ist, um Kontakt mit dem Boden zu haben.

3. Das Verfahren nach irgendeinem der vorigen Ansprüche, wobei das hinzugefügte leitende Material (16) ein nicht ausgehärtetes aushärtbares leitendes Material ist.

4. Das Verfahren nach irgendeinem der vorigen Ansprüche, wobei zumindest eine Leiterbahn (6) im endgültigen Reifen (5) angelegt wurde, die sich zumindest von der inneren umlaufenden Oberfläche (11) der ersten Schicht (1) durch die erste Schicht (1) hin zur äußeren umlaufenden Oberfläche (10) der ersten Schicht (1) ausdehnt.

5. Das Verfahren nach dem vorigen Anspruch, wobei die Leiterbahn (6) im endgültigen Reifen (5) angelegt wurde, indem zumindest ein Teil der ersten Schicht (1) des vorläufigen Reifens von der äußeren umlaufenden Oberfläche (10) der ersten Schicht (1) durch die erste Schicht (1) hin zur inneren umlaufenden Oberfläche (11) der ersten Schicht (1) entfernt wurde und indem, nach dem Anlegen der Bahn (6), die Bahn (6) mit dem leitenden Material (16) gefüllt wurde, um nach dem Aushärten die Leiterbahn (6) im endgültigen Reifen (5) zu erhalten.

6. Das Verfahren nach dem vorigen Anspruch, wobei die Bahn (6) im vorläufigen Reifen mit einem Ablösewerkzeug für das erste Material angelegt wird.

7. Das Verfahren nach dem vorigen Anspruch, wobei die Bahn (6) im vorläufigen Reifen mit einem erwärmten Ablösewerkzeug für das erste Material angelegt wird.

8. Das Verfahren nach Anspruch 4, wobei die Leiterbahn (6) im endgültigen Reifen (5) während des Aushärtens angelegt wird, indem das leitende Material (16) vor dem Aushärten entlang irgendeiner der ungeschnittenen Seitenwände des vorläufigen Reifens hinzugefügt wird.

9. Das Verfahren nach irgendeinem der vorigen Ansprüche, wobei die leitenden Materialien (16) nach dem Aushärten eine gesamte Bodenkontaktfläche (19) von mindestens 150 mm² haben.

10. Das Verfahren nach irgendeinem der vorigen Ansprüche, wobei die leitenden Materialien (16) nach dem Aushärten eine gesamte Bodenkontaktfläche (19) von weniger als 500 mm² haben.

11. Das Verfahren nach irgendeinem der vorigen Ansprüche, wobei das nicht kreidende erste Material weniger als 0,5 pphr Industrieruß umfasst.

12. Das Verfahren nach dem vorigen Anspruch, wobei das nicht kreidende erste Material weniger als 0,2 pphr Industrieruß umfasst.

13. Das Verfahren nach irgendeinem der vorigen Ansprüche, wobei der spezifische elektrische Widerstand des nicht kreidenden ersten Materials mehr als 10¹⁰ Ωcm beträgt.

14. Das Verfahren nach irgendeinem der vorigen Ansprüche, wobei das nicht kreidende erste Material zwischen 30 pphr und 60 pphr verstärkendes Füllmaterial umfasst.

15. Das Verfahren nach dem vorigen Anspruch, wobei das nicht kreidende erste Material 50 pphr verstärkendes Füllmaterial umfasst.

16. Das Verfahren nach irgendeinem der vorigen Ansprüche, wobei das verstärkende Füllmaterial Kieselerde umfasst.

17. Das Verfahren nach irgendeinem der vorigen Ansprüche, wobei das nicht kreidende verstärkende Füllmaterial ein weißes nicht kreidendes verstärkendes Füllmaterial umfasst.

18. Das Verfahren nach irgendeinem der vorigen Ansprüche, wobei der nicht ausgehärtete aushärtbare vorläufige Reifen eine weitere Schicht (2) umfasst, eine zweite Schicht (2), aus einem zweiten Material, die sich in Umfangsrichtung des Reifens ausdehnt und die eine zweite äußere umlaufende Oberfläche (12) umfasst, wobei entlang der zweiten äußeren umlaufenden Oberfläche die erste Schicht (1) aus dem ersten Material so bereitgestellt ist, dass die erste innere umlaufende Oberfläche (11) der ersten Schicht entlang der zweiten äußeren umlaufenden Oberfläche (12) verläuft, wobei das Material der zweiten Schicht (2) einen geringeren elektrischen Widerstand als das Material der ersten Schicht (1) hat und wobei sich das leitende Material (16) zumindest bis zur zweiten Schicht (2) hinauf ausdehnt.

19. Das Verfahren nach dem vorigen Anspruch, wobei das Material der zweiten Schicht (2) eine zylindrische Metallplatte (7) umfasst.

20. Das Verfahren nach Anspruch 18, wobei die zweite Schicht (2) eine zweite innere umlaufende Oberfläche (13) an einer Seite der zweiten Schicht (2) gegenüber der zweiten äußeren umlaufenden Oberfläche (12) umfasst, wobei eine dritte Schicht (3) aus einem dritten Material unter der zweiten Schicht (2) in Umfangsrichtung des Reifens (5) hinzugefügt wird, wobei diese dritte Schicht (3) eine dritte äußere umlaufende Oberfläche (14) umfasst, welche entlang der zweiten inneren umlaufenden Oberfläche (13) verläuft und wobei die dritte Schicht (3) in elektrischer Verbindung mit der zweiten Schicht (2) und den elektrisch leitenden Mitteln (15) des Rades (4) steht.

21. Das Verfahren nach dem vorigen Anspruch, wobei sich das leitende Material (16) von der dritten Schicht (3), entlang der ersten (1) und der zweiten Schicht (2) bis zur äußeren Oberfläche der ersten äußeren umlaufenden Oberfläche (10) hinauf ausdehnt, sodass das leitende Material (16) elektrisch mit der dritten Schicht (3) verbunden ist.

## Revendications

1. Procédé de fabrication d'un pneu solide antistatique sans marquage (5) pour une roue de véhicule (4) comprenant des moyens électroconducteurs (15), le pneu (5) comprenant une bande de roulement (23) délimitée par deux parois latérales de pneu opposées (21), le procédé comprenant les étapes consécutives de :
- la fabrication d'un pneu solide vulcanisable non vulcanisé préliminaire comprenant une première couche (1) qui s'étend dans la direction circonférentielle du pneu, la première couche (1) comprenant une surface circonférentielle extérieure (10) et une surface circonférentielle intérieure (11) raccordées entre elles par des premières parois latérales de couche opposées (20) délimitant ensemble la première couche (1) et étant réalisées en un premier matériau sans marquage contenant un matériau de remplissage de renforcement sans marquage,
- l'ajout, le long d'au moins une des parois latérales de pneu opposées (21) du pneu préliminaire, d'un matériau conducteur (16) présentant une résistance électrique qui est inférieure à la résistance électrique du premier matériau, le matériau conducteur (16) s'étendant depuis la surface circonférentielle intérieure (11) de la première couche (1) vers la surface circonférentielle extérieure (10) de la première couche (1),
- la vulcanisation du pneu préliminaire vulcanisable non vulcanisé doté du matériau conducteur (16) pour obtenir le pneu final (5), dans lequel le matériau conducteur (16) est raccordé électriquement aux moyens électroconducteurs (15) de la roue (4) et dans lequel les premières parois latérales de couche respectives (20) font partie des parois latérales de pneu respectives (21).

2. Procédé selon la revendication précédente, dans lequel la première couche (1) est prévue pour toucher le sol.

3. Procédé selon l'une quelconque des revendications précédentes, dans lequel le matériau conducteur ajouté (16) est un matériau conducteur vulcanisable non vulcanisé.

4. Procédé selon l'une quelconque des revendications précédentes, dans lequel au mois un trajet conducteur (6) a été créé dans le pneu final (5) qui s'étend au moins de la surface circonférentielle intérieure (11) de la première couche (1) au travers de la première couche (1) vers la surface circonférentielle extérieure (10) de la première couche (1).

5. Procédé selon la revendication précédente, dans lequel le trajet conducteur (6) dans le pneu final (5) a été créé par retrait d'au moins une partie de la première couche (1) du pneu préliminaire de la surface circonférentielle extérieure (10) de la première couche (1) au travers de la première couche (1) vers la surface circonférentielle intérieure (11) de la première couche (1) et après la création du trajet (6) le remplissage du trajet (6) avec le matériau conducteur (16) pour obtenir après vulcanisation le trajet conducteur (6) dans le pneu final (5).

6. Procédé selon la revendication précédente, dans lequel le trajet (6) dans le pneu préliminaire est créé avec un outil de retrait de premier matériau.

7. Procédé selon la revendication précédente, dans lequel le trajet (6) dans le pneu préliminaire est créé avec un outil de retrait de premier matériau chauffé.

8. Procédé selon la revendication 4, dans lequel le trajet conducteur (6) dans le pneu final (5) est créé pendant la vulcanisation par ajout du matériau conducteur (16) le long de l'une quelconque des parois latérales de pneu préliminaire non découpées avant la vulcanisation.

9. Procédé selon l'une quelconque des revendications précédentes, dans lequel les matériaux conducteurs (16) après vulcanisation présentent une zone de surface (19) touchant le sol totale d'au moins 150 mm².

10. Procédé selon l'une quelconque des revendications précédentes, dans lequel les matériaux conducteurs (16) après vulcanisation présentent une zone de surface (19) touchant le sol totale inférieure à 500 mm².

11. Procédé selon l'une quelconque des revendications précédentes, dans lequel le premier matériau sans marquage comprend moins de 0,5 pphr de noir de carbone.

12. Procédé selon la revendication précédente, dans lequel le premier matériau sans marquage comprend moins de 0,2 pphr de noir de carbone.

13. Procédé selon l'une quelconque des revendications précédentes, dans lequel la résistivité électrique du premier matériau sans marquage est supérieure à 10¹⁰ Ωcm.

14. Procédé selon l'une quelconque des revendications précédentes, dans lequel le premier matériau sans marquage comprend entre 30 pphr et 60 pphr de matériau de remplissage de renforcement.

15. Procédé selon la revendication précédente, dans lequel le premier matériau sans marquage comprend 50 pphr de matériau de remplissage de renforcement.

16. Procédé selon l'une quelconque des revendications précédentes, dans lequel le matériau de remplissage de renforcement comprend de la silice.

17. Procédé selon l'une quelconque des revendications précédentes, dans lequel le matériau de remplissage de renforcement sans marquage comprend un matériau de remplissage de renforcement sans marquage blanc.

18. Procédé selon l'une quelconque des revendications précédentes, dans lequel le pneu préliminaire vulcanisable non vulcanisé comprend une autre couche (2), une deuxième couche (2), d'un second matériau qui s'étend dans la direction circonférentielle du pneu (5) et qui comprend une seconde surface circonférentielle extérieure (12), dans lequel le long de la seconde surface circonférentielle extérieure la première couche (1) du premier matériau est prévue de telle manière que la première surface circonférentielle intérieure (11) de la première couche s'étende le long de la seconde surface circonférentielle extérieure (12), le matériau de la deuxième couche (2) présentant une résistance électrique inférieure à celle du matériau de la première couche (1) et dans lequel le matériau conducteur (16) s'étend au moins jusqu'à la deuxième couche (2).

19. Procédé selon la revendication précédente, dans lequel le matériau de la deuxième couche (2) comprend une plaque métallique cylindrique (7).

20. Procédé selon la revendication 18, dans lequel la deuxième couche (2) comprend une seconde surface circonférentielle intérieure (13) sur un côté de la deuxième couche (2) opposée à la seconde surface circonférentielle extérieure (12), dans lequel une troisième couche (3) d'un troisième matériau est ajoutée sous la deuxième couche (2) dans la direction circonférentielle du pneu (5), la troisième couche (3) comprenant une troisième surface circonférentielle extérieure (14) s'étendant le long de la seconde surface circonférentielle intérieure (13) et dans lequel la troisième couche (3) est en connexion électrique avec la deuxième couche (2) et les moyens électroconducteurs (15) de la roue (4).

21. Procédé selon la revendication précédente, dans lequel le matériau conducteur (16) s'étend depuis la troisième couche (3), le long de la première (1) et la deuxième couche (2) jusqu'à la surface extérieure de la première surface circonférentielle extérieure (10) de sorte que le matériau conducteur (16) soit raccordé électriquement à la troisième couche (3).
